# EUROPEAN PATENT APPLICATION

(11) **EP 4 475 292 A1**
(43) Date of publication of application: **11.12.2024**
(21) Application number: 22941924.7
(22) Date of filing: 16.05.2022
(51) Int. Cl.: H01M 50/147, H01M 50/209, H01M 50/244, H01M 50/249

(54) **END COVER ASSEMBLY OF BATTERY CELL, BATTERY CELL, BATTERY, AND ELECTRIC DEVICE**

(71) Applicant: Contemporary Amperex Technology (Hong Kong) Limited, Central, Central And Western District (HK)
(72) Inventor: LI, Quankun, Ningde, Fujian 352100 (CN); ZHOU, Wenlin, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2022/093104
(87) International publication number: WO 2023/220873

(57) **Abstract**

The present application discloses an end cover assembly of a battery cell, a battery cell, a battery, and an electric device. The end cover assembly comprises: an end cover, an electrode terminal, a terminal board, and an insulating member. The end cover is provided with a first through hole; the electrode terminal comprises a terminal body and an annular first protrusion protruding from the outer peripheral surface of the terminal body, at least part of the terminal body is accommodated in the first through hole, and the diameter of the first protrusion is greater than that of the first through hole; the terminal board is disposed on the side of the end cover facing away from the first protrusion and is connected to the terminal body; the insulating member is disposed around the terminal body; the insulating member comprises an insulating body and a blocking portion, at least part of the insulating body is disposed between the terminal board and the end cover, and the blocking portion protrudes from the side of the insulating body facing away from the terminal board, extends into the first through hole, and is disposed between the end cover and the terminal body. According to the end cover assembly of the battery cell of the embodiments of the present application, the safety and stability of the end cover assembly of the battery cell are improved.

## Description

### TECHNICAL FIELD

The present disclosure relates to the field of a battery, and in particular to an end cover assembly of a battery cell, a battery cell, a battery and an electrical apparatus.

### BACKGROUND

With a development of modern society and an enhancement of people's environmental awareness, more and more driving power supplies for electric tools and new energy vehicles are developing in a direction of high capacity and high safety, which provides opportunities for an application and development of rechargeable batteries.

In a development of battery technology, as people pay more attention to the safety and stability of a battery, a reliability and insulation performance of an end cover assembly of a battery cell have always been one of research focuses in the industry.

### SUMMARY

In view of the above problems, the present disclosure provides an end cover assembly of a battery cell, a battery cell, a battery and an electrical apparatus, which improves a safety and stability of the end cover assembly of a battery cell.

In a first aspect, the present disclosure provides an end cover assembly of a battery cell, including:
an end cover provided with a first through hole;
an electrode terminal including a terminal body and an annular first protrusion protruding from an outer peripheral surface of the terminal body, at least part of the terminal body being accommodated in the first through hole, and a diameter of the first protrusion being greater than that of the first through hole;
a terminal board disposed on a side of the end cover facing away from the first protrusion and connected to the terminal body; and
an insulating member disposed around the terminal body and comprising an insulating body and a blocking portion, at least part of the insulating body being disposed between the terminal board and the end cover, and the blocking portion protruding from a side of the insulating body facing away from the terminal board, extending into the first through hole, and disposed between the end cover and the terminal body.

In the technical solution of embodiments of the present disclosure, the first through hole provided in the end cover extends the terminal body of the electrode terminal outward through the first through hole, thereby leading out the electric energy inside the battery cell; the terminal board connected with the terminal body can fix the electrode terminal and lead out the electric energy of the battery cell; the insulating body provided in the insulating member can insulate the terminal board from the end cover, and the blocking portion protruding from the insulating body and provided between the end cover and the terminal body can extend a distance from the terminal body to the end cover in the radial direction, thereby reducing a risk of a short circuit caused by an electrical connection between a metal wire on the terminal body and the end cover.

In some embodiments, the end cover assembly further includes a sealing member including a sealing portion disposed between the end cover and the first protrusion, wherein the sealing portion is connected to the first protrusion in a sealing manner, and the blocking portion is abutted against the sealing portion. In the above technical solution, the sealing portion provided forms a sealing connection with the first protrusion, so as to improve a sealing performance of the electrode terminal; the blocking portion abutted against the sealing portion can effectively prevent a short circuit caused by a metal wire of the electrode terminal passing through a gap between the blocking portion and the sealing portion and contacting the end cover.

In some embodiments, the blocking portion is in an interference fit with the sealing portion. In the above technical solution, the blocking portion in an interference fit with the sealing portion can improve the connection strength between the insulating portion and the sealing portion in the axial direction of the terminal body, ensuring the sealing performance between the insulating member and the sealing member, and further blocking the metal wire of the electrode terminal contacting the end cover, which improves the safety performance of the end cover assembly.

In some embodiments, the sealing member further includes a connecting portion disposed around the terminal body, and the sealing portion is disposed around the connecting portion. In the above solution, the sealing portion provided to connect the sealing member to the terminal body can improve the sealing performance of the terminal body.

In some embodiments, the sealing member further includes an abutment portion disposed around the connecting portion; in a radial direction of the first through hole, the abutment portion is clamped between the connecting portion and the blocking portion. With the abutment portion provided, the connection strength with the blocking portion is increased in the radial direction of the first through hole, ensuring the sealing performance between the connecting portion and the terminal body, and at the same time lengthening a connection path between the metal wire of the electrode terminal and the end cover to prevent the metal wire contacting the end cover.

In some embodiments, the abutment portion is in an interference fit with the blocking portion. In the above solution, with the abutment portion in an interference fit with the blocking portion, the connection strength of the sealing member and the insulating member is improved in the radial direction of the first through hole, further preventing the metal wire from contacting the end cover, and improving the safety performance of the end cover assembly.

In some embodiments, the abutment portion is provided at an end of the connecting portion close to the first protrusion and is connected to the sealing portion. In the above technical solution, with the abutment portion provided at one end of the connecting portion close to the first protrusion and connected to the sealing portion, a connection with the blocking portion can be formed inside the blocking portion to ensure a balanced force on two opposite sides of the blocking portion in a radial direction; the abutment portion connected to the sealing portion can facilitate production and improve a structure integrity of the sealing member.

In some embodiments, a side of the connecting portion facing away from the first protrusion is abutted against the terminal board. In the above technical solution, the connecting portion abutted against the terminal board can cut off the path of the metal wire of the terminal body passing through the gap between the connecting portion and the terminal board, thereby improving the safety of the end cover assembly.

In some embodiments, a side of the connecting portion facing away from the first protrusion is in an interference fit with the terminal board. With the connecting portion in an interference fit with the terminal board, a relative pressure between the sealing member and the terminal board is enhanced, preventing the metal wire of the terminal body from being connected to the end cover through the connecting portion to form a short circuit, and guaranteeing the safety of the end cover assembly.

In some embodiments, a first avoidance groove which recesses inwardly is formed on a side of the connecting portion facing the terminal body. In the above technical solution, the first avoidance groove provided can provide space for a compressive deformation of the connecting portion and prevent the sealing member from premature aging due to excessive stress.

In some embodiments, a second avoidance groove is formed by a gap between the connecting portion and the insulating member. In the above technical solution, the second avoidance groove provided can provide space for a compressive deformation of the connecting portion and prevent the sealing member from premature aging due to excessive stress.

In some embodiments, a first recess which recesses inwardly is provided on the outer peripheral surface of the terminal body, is spaced apart from the first protrusion in an axial direction of the first through hole, and is configured to accommodate at least part of the terminal board. In the above technical solution, the first recess provided can fix the terminal board, thereby improving the connection stability between the terminal board and the terminal body.

In some embodiments, the terminal board is snap-fitted to the terminal body. With the snap-fitted connection, the convenience of connecting the terminal board and the terminal body is improved.

In a second aspect, the present disclosure provides a battery cell including
a housing with an opening;
the end cover assembly according to any one of the above embodiments in the first aspect for closing the opening to form an accommodating cavity with the housing; and
an electrode assembly provided in the accommodating cavity and electrically connected to the electrode terminal of the end cover assembly.

In a third aspect, the present disclosure provides a battery including the battery cell in the second aspect.

In a fourth aspect, the present disclosure provides an electrical apparatus including the battery in the third aspect to provide electrical energy.

The above description is only a summary of the technical solutions of the present disclosure. In order to enable the technical means of the present disclosure to be understood more clearly and implemented according to the content of the description, and in order to make the above and other purposes, features and advantages of the present disclosure more obvious and understandable, specific implementations of the present disclosure are specifically listed below.

### BRIEF DESCRIPTION OF THE DRAWINGS

Features, advantages and technical effects of exemplary embodiments of the present disclosure will be described below with reference to accompanying drawings.
FIG. 1 is a schematic structural diagram of a vehicle according to some embodiments of the present disclosure;
FIG. 2 is a schematic exploded structural diagram of a battery according to some embodiments of the present disclosure;
FIG. 3 is a schematic structural diagram of a battery module shown in FIG. 2;
FIG. 4 is a schematic structural diagram of an end cover assembly provided in some embodiments of the present disclosure;
FIG. 5 is a schematic exploded structural diagram of an end cover assembly provided in some embodiments of the present disclosure.
FIG. 6 is a schematic front structural diagram of an end cover assembly provided in some embodiments of the present disclosure;
FIG. 7 is a schematic cross-sectional structural diagram of part A-A of an end cover assembly shown in FIG. 6;
FIG. 8 is an enlarged structural schematic diagram of a circular frame B of an end cover assembly shown in FIG. 6;
FIG. 9 is a schematic structural diagram of an end cover assembly provided in other embodiments of the present disclosure.

### Detailed description of reference signs

1000, vehicle;
100. Battery; 200. Controller; 300. Motor;
10. Box; 11. First part; 12. Second part;
20. Battery cell; 30. Battery module;
21. End cover assembly; 2101. End cover; 2102. Electrode terminal; 2103. Terminal board; 2104. Insulating member; 2105. First through hole; 2106. Terminal body; 2107. First protrusion; 2108. Insulating body; 2109. Blocking portion; 2110. Sealing member; 2111. Sealing portion; 2112. Connecting portion; 2113. Abutment portion; 2114. First avoidance groove; 2115. Second avoidance groove; 2116. First recess; 2117. Second through hole; 2118, Third through hole;
22. Housing; 23. Electrode assembly; 24. Pressure relief mechanism; 25. Electrode.

### DETAILED DESCRIPTION

Implementations of technical solutions of the present disclosure will be described in detail below with reference to accompanying drawings. Following implementations are only used to illustrate the technical solutions of the present disclosure more clearly, and are therefore only used as examples and cannot be used to limit the protection scope of the present disclosure.

Embodiments of technical solutions of the present disclosure will be described in detail below with reference to accompanying drawings. Following embodiments are only used to illustrate the technical solutions of the present disclosure more clearly, and are therefore only used as examples and cannot be used to limit the protection scope of the present disclosure.

Unless otherwise defined, all technical and scientific terms used in the present disclosure have the same meaning as those normally understood by those skilled in the art. Terms used in the description of the present disclosure are for purposes of describing specific embodiments only and are not intended to restrict the present disclosure. Terms "including" and "having" and any variation thereof in the description, claims and the above drawings of the present disclosure are intended to cover non-exclusive inclusion.

In the description of the embodiments of the present disclosure, technical terms "first", "second", etc. are used to distinguish between different objects and cannot be understood as indicating or implying the relative importance or implicitly indicating the number of or a particular order or primary or secondary relationship of technical features. The term "a plurality of" as used in embodiments of the present disclosure means more than two.

Reference to "embodiments" in the present disclosure means that a particular feature, structure or characteristic described in conjunction with embodiments may be included in at least one embodiment of the present disclosure. The presence of the phrase at various points in the specification does not necessarily refer to the same embodiment, nor is it a separate or alternative embodiment that is mutually exclusive with other embodiments. Those skilled in the art understand, both explicitly and implicitly, that the embodiments described herein may be combined with other embodiments.

In the description of embodiments of the present disclosure, the term "and/or" is only an association relationship describing associated objects, indicating that there can be three kinds of relationships, for example, A and/or B, can mean: there is A alone, there is A and B simultaneously, and there is B alone. In addition, the character "/" in the present disclosure generally indicates that the associated objects are in an "or" relationship.

In the description of embodiments of the present disclosure, the term "a plurality of" refers more than two (including two). Similarly, the term "a plurality of groups" refers to two or more groups (including two groups), and "a plurality of pieces" refers to more than two pieces (including two pieces).

In the description of embodiments of the present disclosure, orientations or positional relationship indicated by technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "peripheral", etc. are based on orientations or positional relationship indicated in the drawings, is only for the convenience of describing the embodiments of the present disclosure and simplifying the description, and does not indicate or imply that the device or element referred to must have a specific orientation, be constructed and operated in a specific orientation, and therefore cannot be understood as limitations to the embodiments of the present disclosure.

In the description of embodiments of the present disclosure, it should be noted that, unless otherwise stated or defined, terms "installation", "connected to", "connected with", "attachment" and the like are to be understood broadly, and may be, for example, a fixed connection, a detachable connection, or an integral connection; they can be connected directly or indirectly through an intermediate medium or an internal communication or interaction between two elements. The specific meaning of the above terms in the present disclosure can be understood by those skilled in the art according to actual circumstance.

At present, the market of new energy vehicles is developing rapidly. A battery is used as a power source of a new energy vehicle, its safety and reliability are crucial to the entire system. The battery is usually composed of a plurality of battery cells connected together, and an end cover assembly of a battery cell is configured to lead out the electric energy from the battery cell. The end cover assembly usually includes an electrode terminal, a terminal board and an end cover. The electrode terminal is electrically connected to the terminal board to lead out the electric energy, and the end cover is insulated from both the electrode terminal and the terminal board to prevent electric energy from leaking from the end cover. During the connection process between the electrode terminal and the end cover, some metal wires will inevitably be produced due to relative friction on t surfaces of the electrode terminal and the end cover. During an installation process, the metal wires will extend along a radial direction of the electrode terminal and contact the end cover, thereby forming a short-circuit connection between the electrode terminal and the end cover, causing a safety accident for the battery cell.

Based on the above problems, the inventors have researched and designed an end cover assembly of a battery cell including an end cover provided with a first through hole, an electrode terminal and a terminal board. The electrode terminal includes a terminal body and an annular first protrusion protruding from an outer peripheral surface of the terminal body, at least part of the terminal body is accommodated in the first through hole, and a diameter of the first protrusion is greater than that of the first through hole. The insulating member in the end cover is disposed around the terminal body and includes an insulating body and a blocking portion, at least part of the insulating body is disposed between the terminal board and the end cover, and the blocking portion protrudes from a side of the insulating body facing away from the terminal board, extends into the first through hole, and disposed between the end cover and the terminal body.

In the technical solution of embodiments of the present disclosure, the first through hole provided in the end cover extends the terminal body of the electrode terminal outward through the first through hole, and the terminal board connected with the terminal body fixes the electrode terminal and leads out the electric energy of the battery cell; the insulating body provided in the insulating member can insulate the terminal board from the end cover, and the blocking portion protruding from the insulating body and provided between the end cover and the terminal body can extend a distance from the terminal body to the end cover in the radial direction, thereby reducing a risk of a short circuit caused by an electrical connection between a metal wire on the terminal body and the end cover.

A sampling assembly disclosed in embodiments of the present disclosure can be used in, but are not limited to, electrical equipment such as vehicles, ships, or aircrafts. Similarly, the sampling assembly implemented in the present disclosure can be used in structures that require a firm connection between a conductor and a circuit board, which can achieve the technical effect of firmly connecting the circuit board and the connecting piece to improve sampling efficiency.

Embodiments of the present disclosure provide an electrical apparatus adopting a battery as a power source. The electrical apparatus may be, but is not limited to, a mobile phone, a tablet, a laptop, an electric toy, an electric tool, a battery car, an electric vehicle, a ship, a spacecraft, etc. The electric toy can include a fixed or mobile electric toy, such as a game console, an electric car toy, an electric ship toy, an electric airplane toy, etc., and the spacecraft can include an airplane, a rocket, a space shuttle, a spaceship, etc.

The following embodiments, for the sake of illustration, take an electrical apparatus according to embodiments of the present disclosure as an example of a vehicle 1000.

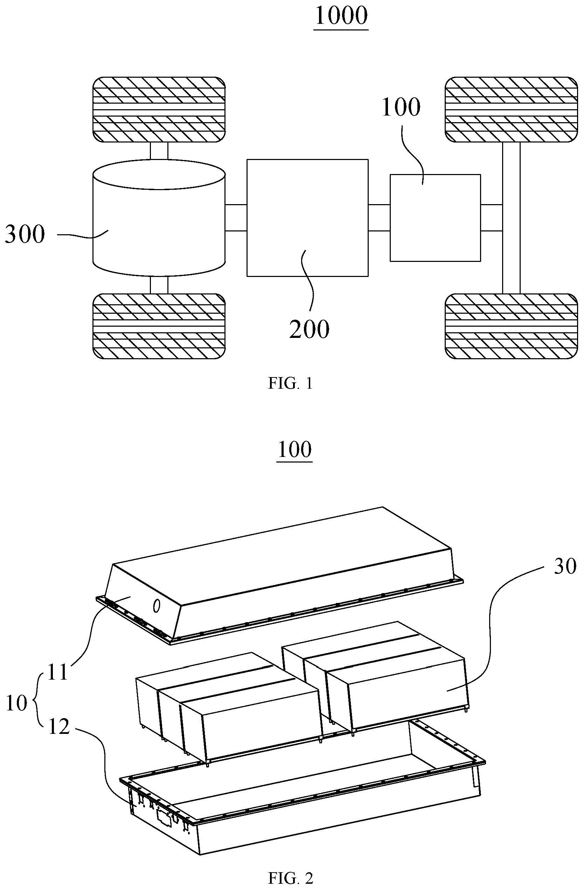

Referring FIG. 1, FIG. 1 is a schematic structural diagram of the vehicle 1000 according to some embodiments of the present disclosure. The vehicle 1000 may be a fuel vehicle, a gas vehicle or a new energy vehicle, and the new energy vehicle may be a pure electric vehicle, a hybrid vehicle or an extended-range vehicle, etc. A battery 100 is provided in the interior of a vehicle 1000, and can be arranged in the bottom or in the head or back of the vehicle 1000. The battery 100 can be configured for providing electricity to the vehicle 1000, for example, the battery 100 can be used as an operating power source for the vehicle 1000. The vehicle 1000 may also include a controller 200 and a motor 300. The controller 200 is configured for controlling the battery 100 to provide electricity to the motor 300, for example, for electricity requirements for the starting, navigation and driving of the vehicle 1000.

In some embodiments of the present disclosure, the battery 100 may be used not only as an operating power source for the vehicle 1000, but also as a driving power source for the vehicle 1000, providing driving power to the vehicle 1000 in place or in part in place of fuel or natural gas.

Referring to FIG. 2, FIG. 2 is a schematic exploded structural diagram of the battery 100 according to some embodiments of the present disclosure. The battery 100 includes a box 10 and battery cells (not shown in the figure), and the battery cells are accommodated in the box 10. The box 10 provides an accommodating space for the battery cells and can be formed in a plurality of structures.

In some embodiments, the box 10 includes a first part 11 and a second part 12 that are mutually covered. The first part 11 and the second part 12 jointly define the accommodating space for accommodating the battery cells. The second part 12 can have a hollow structure with an opening at one end, the first part 11 can have a plate structure, and the first part 11 closes an opening side of the second part 12 to form the accommodating space. Both the first part 11 and the second part 12 may have a hollow structure with an opening at one side. An opening side of the first box part 11 closes an opening side of the second part 12. Of course, the box 10 formed by the first part 11 and the second part 12 can be in a variety of shapes, such as cylinders, cuboids, etc.

In the battery 100, a plurality of battery cells can be provided. The plurality of battery cells can be in a series connection, a parallel connection, or a mixed connection. The mixed connection means that the plurality of battery cells are connected in series and parallel. The plurality of battery cells can be directly in a series connection, a parallel connection, or a mixed connection, and then the entirety composed of the plurality of battery cells is accommodated in the box 10. Of course, the plurality of battery cells can be in a series connection, a parallel connection, or a mixed connection to form a battery module 30, and a plurality of battery modules 30 can be in a series connection, a parallel connection, or a mixed connection to form the entirety, and accommodated in the box 10.

Each battery cell can be a secondary battery or a primary battery; it can also be a lithium-sulfur battery cell, a sodium-ion battery cell or a magnesium-ion battery cell, but is not limited thereto. The battery cell 20 may also be cylindrical, flat, rectangular parallelepiped or other shapes.

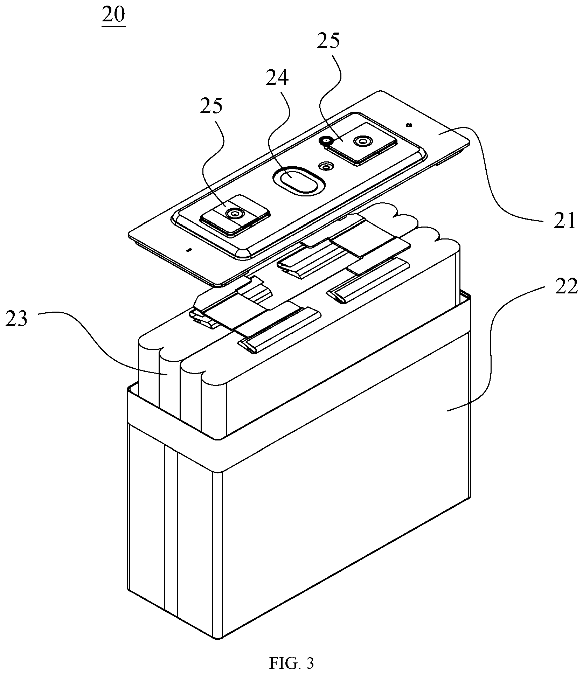

Referring to FIG. 3, FIG. 3 is an exploded schematic structural diagram of a battery cell 20 according to some embodiments of the present disclosure. The battery cell 20 refers to the smallest unit that constitutes the battery. As shown in FIG. 3, the battery cell 20 includes an end cover assembly 21, a housing 22, an electrode assembly 23 and other functional components.

The end cover assembly 21 refers to a component that closes an opening of the housing 22 to isolate an internal environment of the battery cell 20 from an external environment. Without limitation, the shape of the end cover assembly 21 may be adapted to the shape of the housing 22 to fit the housing 22. Optionally, the end cover assembly 21 can be made of a material with a certain hardness and strength (such as aluminum alloy). In this way, the end cover assembly 21 is less likely to be deformed when subjected to extrusion and collision, thus the structural strength of the battery cell 20 is high and a safety performance is improved.

In some embodiments of the present disclosure, functional components such as electrodes 25 may be provided on the end cover assembly 21. The electrodes 25 may be configured to be electrically connected with the electrode assembly 23 for outputting or inputting electrical energy of the battery cell 20.

In some embodiments, the end cover assembly 21 may also be provided with a pressure relief mechanism 24 for releasing an internal pressure when the internal pressure or temperature of the battery cell 20 reaches a threshold. The end cover assembly 21 can also be made of various materials, such as copper, iron, aluminum, stainless steel, aluminum alloy, plastic, etc., which are not particularly limited in the embodiments of the present disclosure. In some embodiments, an insulating member may also be provided inside the end cover assembly 21, and may be configured to isolate electrical connection components in the housing 22 from the end cover assembly 21, thereby reducing the risk of short circuit. For example, the insulating member may be plastic, rubber, etc.

The housing 22 is a component configured to cooperate with the end cover assembly 21 to form the internal environment of the battery cell 20. The internal environment formed can be configured to accommodate the electrode assembly 23, an electrolyte and other components. The housing 22 and the end cover assembly 21 may be independent components. An opening may be provided on the housing 22 and the end cover assembly 21 closes the opening at the opening to form the internal environment of the battery cell 20. Without limitation, the end cover assembly 21 and the housing 22 can also be integrated. Specifically, the end cover assembly 21 and the housing 22 can form a common connection surface before other components are put into the housing; when the housing 22 needs to be packaged inside, the end cover assembly 21 closes the housing 22. The housing 22 can be of various shapes and sizes, such as rectangular parallelepiped, cylinder, hexagonal prism, etc.

Specifically, the shape of the housing 22 can be determined according to the specific shape and size of the electrode assembly 23. The housing 22 may be made of a variety of materials, such as copper, iron, aluminum, stainless steel, aluminum alloy, plastic, etc., which are not particularly limited in the embodiments of the present disclosure.

The electrode assembly 23 is a component in the battery cell 100 where electrochemical reactions occur. One or more electrode assemblies 23 may be contained within the housing 22. The electrode assembly 23 is mainly formed by positive electrode sheets and negative electrode sheets being wounding or stacked, and a separator is usually provided between the positive electrode sheets and the negative electrode sheets. Portions of the positive electrode sheets and the negative electrode sheets that contain active material constitute a main body of the electrode assembly, and portions of the positive electrode sheets and the negative electrode sheets that do not contain active material constitute tabs. A positive electrode tab and a negative electrode tab can be both located at one end of the main body or located at two ends of the main body, respectively. During a charging or discharging process of the battery, the positive active material and negative active material react with the electrolyte, and the tabs are connected to the electrode terminals to form a current loop.

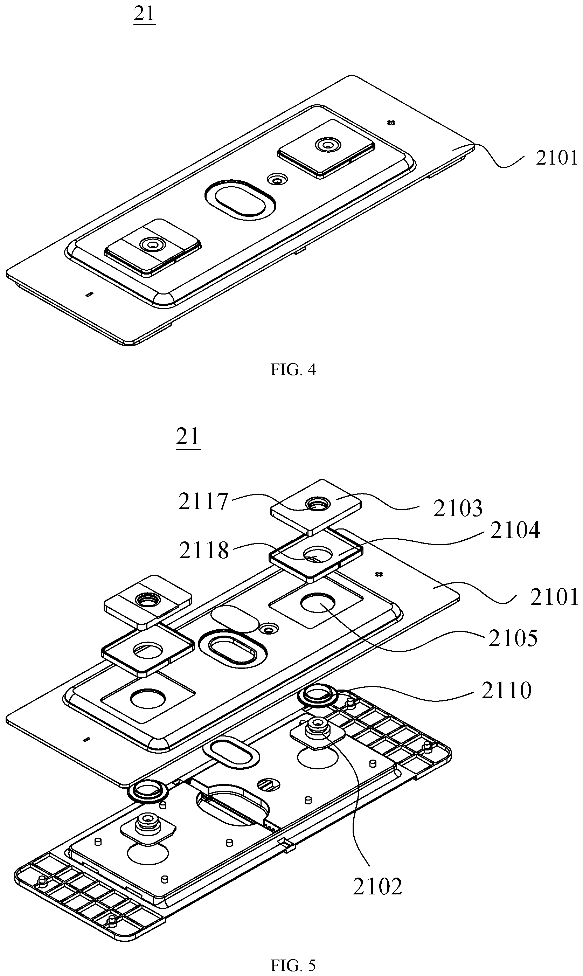

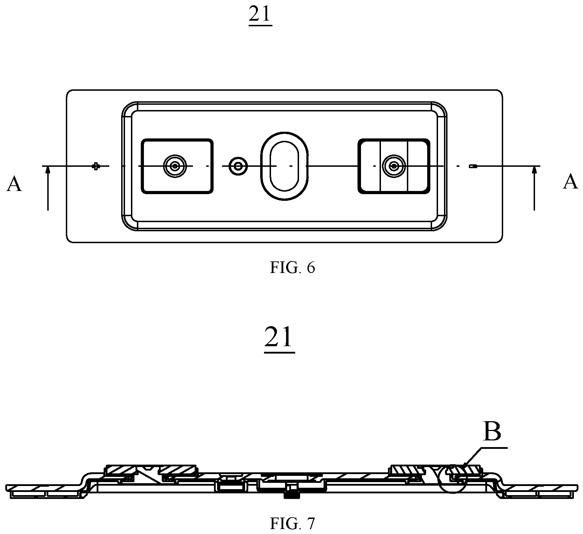

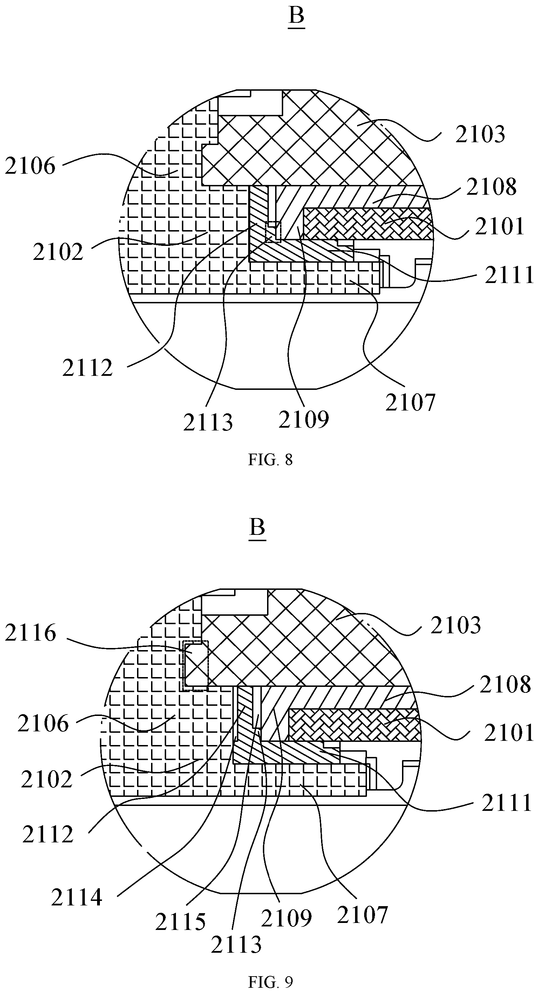

Please refer to FIGS. 4 to 9. FIG. 4 is a schematic structural diagram of the end cover assembly 21 provided in some embodiments of the present disclosure. FIG. 5 is an exploded schematic structural diagram of the end cover assembly 21 provided in some embodiments of the present disclosure. FIG. 6 is a schematic front structural diagram of the end cover assembly 21 provided in some embodiments of the present disclosure; FIG. 7 is a schematic cross-sectional structural diagram of part A-A of THE end cover assembly 21 shown in FIG. 6; FIG. 8 is an enlarged structural schematic diagram of a circular frame B of the end cover assembly 21 shown in FIG. 6; FIG. 9 is a schematic structural diagram of the end cover assembly 21 provided in other embodiments of the present disclosure.

Embodiments of the present disclosure provide the end cover assembly 21 of the battery cell 20, including an end cover 2101, an electrode terminal 2102, a terminal board 2103 and an insulating member 2104. The end cover 2101 is provided with a first through hole 2105. The electrode terminal 2102 includes a terminal body 2106 and an annular first protrusion 2107 protruding from an outer peripheral surface of the terminal body 2106, at least part of the terminal body 2106 is accommodated in the first through hole 2105, and a diameter of the first protrusion 2107 is greater than that of the first through hole 2105. The terminal board 2106 is disposed on a side of the end cover 2101 facing away from the first protrusion 2107 and connected to the terminal body 2106. The insulating member 2104 is disposed around the terminal body 2106 and includes an insulating body 2108 and a blocking portion 2109, at least part of the insulating body 2108 is disposed between the terminal board 2103 and the end cover 2101, and the blocking portion 2109 protrudes from a side of the insulating body 2108 facing away from the terminal board 2103, extends into the first through hole 2105, and disposed between the end cover 2101 and the terminal body 2106.

In the end cover assembly 21, the electrode terminal 2102 is connected to the electrode assembly 23 to lead out or introduce the electric energy in the electrode assembly 23. The electrode terminal 2102 may be configured as a columnar body to facilitate connection with external equipment. The electrode terminal 2102 can be made of metal material to maintain good conductivity and strength. The terminal board 2103 may be in a sheet shape and can be electrically connected to the electrode terminal 2102 and fix the electrode terminal 2102. A second through hole 2117 may be provided on the terminal board 2103, and the terminal body 2106 may pass through the second through hole 2117 to be fixed to the terminal board 2103. The terminal board 2103 can also be made of metal with certain strength. The insulating member 2104 can be made of plastic or organic materials. On the end cover 2101, corresponding to the position of the terminal board 2103, an accommodating groove is recessed inwardly to accommodate and fix the terminal board 2103.

In some embodiments of the present disclosure, the insulating member 2104 is also provided in the accommodating groove, and the insulating member 2104 is provided between the terminal board 2103 and the end cover 2101 to insulate the terminal board 2103 from the end cover 2101. A third through hole 2118 may be provided on the insulating member 2104, and the terminal body 2106 can pass through the third through hole 2118. In some embodiments, the orthographic projection of the insulating member 2104 on the end cover 2101 completely covers the orthographic projection of the terminal board 2103 on the end cover 2101, further strengthening the insulation effect between the terminal board 2103 and the end cover 2101.

In some embodiments of the present disclosure, part of the terminal body 2106 of the electrode terminal 2102 passes through the first through hole 2105, and the first protrusion 2107 is located on one side of the end cover 2101. The outer diameter of the terminal body 2106 may be set smaller than the diameter of the first through hole 2105 to form a gap between the first through hole 2105 and the terminal body 2106. The outer diameter of the first protrusion 2107 can be set to be larger than the diameter of the first through hole 2105, so that the first protrusion 2107 is disposed on one side of the end cover 2101 to prevent the first protrusion 2107 from passing through the first through hole 2105.

In the technical solution of the embodiments of the present disclosure, the first through hole 2105 provided in the end cover 2101 extends the terminal body 2106 of the electrode terminal 2102 outward through the first through hole 2105, thereby leading out the electric energy inside the battery cell 20; the terminal board 2103 connected with the terminal body 2106 can fix the electrode terminal 2102 and lead out the electric energy of the battery cell 20; the insulating body 2108 provided in the insulating member 2104 can insulate the terminal board 2103 from the end cover 2101, and the blocking portion 2109 protruding from the insulating body 2108 and provided between the end cover 2101 and the terminal body 2106 can extend a distance from the terminal body 2106 to the end cover 2101 in the radial direction, thereby reducing a risk of a short circuit caused by an electrical connection between a metal wire on the terminal body 2106 and the end cover 2101.

In some embodiments of the present disclosure, a positioning portion (not shown) which protrudes outwardly is formed on a peripheral side of the insulating member 2104 facing the terminal board 2103. By the positioning portion, the terminal board 2103 is positioned, thereby ensuring the stability of the electrode terminal 2102.

In some embodiments of the present disclosure, the end cover assembly 21 further includes a sealing member 2110. The sealing member 2110 includes a sealing portion 2111 disposed between the end cover 2101 and the first protrusion 2107. The sealing portion 2111 is connected to the first protrusion portion 2107 in a sealing manner, and the blocking portion 2109 is abutted against the sealing portion 2111. The sealing member 2110 can be made of an insulating material with a certain degree of toughness to achieve sealing and insulation functions, such as rubber, silicone, etc.

In the above technical solution, the sealing portion 2111 is connected to the first protrusion 2107 in a sealing manner, thereby improving the sealing performance of the electrode terminal 2102; the blocking portion 2109 is abutted against the sealing portion 2111, effectively preventing a short circuit caused by the metal wire of the electrode terminal 2102 passing through the gap between the blocking portion 2109 and the sealing portion 2111 and contacting the end cover 2101.

In some embodiments of the present disclosure, the blocking portion 2109 is in an interference fit with the sealing portion 2111. The interference fit between the blocking portion 2109 and the sealing portion 2111 can be formed in the following way, i.e., the length of the blocking portion 2109 or the sealing portion 2111 may be greater than the gap therebetween, the sealing portion 2111 is squeezed and deformed to be connected with the blocking portion with a certain connection strength. In the above technical solution, the blocking portion 2109 and the sealing portion 2111 are in an interference fit, thereby improving the connection strength between the insulating portion 2104 and the sealing portion 2110 in the axial direction of the terminal body 2106, ensuring the sealing performance between the insulating portion 2104 and the sealing portion 2110, further blocking the connection between the metal wire of the electrode terminal 2102 and the end cover 2101, and improving the safety performance of the end cover assembly 21.

In some embodiments of the present disclosure, the sealing member 2110 further includes a connecting portion 2112 disposed around the terminal body 2106, and the sealing portion 2111 is disposed around the connecting portion 2112. In the above solution, the sealing portion 2111 provided to connect the sealing member 2110 with the terminal body 2106 can improve the sealing performance of the terminal body 2106.

As shown in FIG. 8, in some embodiments of the present disclosure, the sealing member 2110 further includes an abutment portion 2113 arranged around the connecting portion 2112; in the radial direction of the first through hole 2105, the abutment portion 2113 is clamped between the connecting portion 2112 and the blocking portion 2109. By the abutment portion 2113, the connection strength with the blocking portion 2109 in the radial direction of the first through hole 2105 is increased, ensuring the sealing performance between the connecting portion 2112 and the terminal body 2106 while extending the connection path of the metal wire of the electrode terminal 2102 to the end cover 2101, thereby preventing the metal wire from contacting with the end cover 2101.

In some embodiments of the present disclosure, the abutment portion 2113 is in an interference fit with the blocking portion 2109. In the above structure, the length of the blocking portion 2109 or the abutment portion 2113 can be greater than the gap therebetween, and the abutment portion 2113 is squeezed and deformed to be connected with the blocking portion 2109 with a certain connection strength. In the above solution, by the interference fit between the abutment portion 2113 and the blocking portion 2109, the connection strength of the sealing member 2110 and the insulating member 2104 in the radial direction of the first through hole 2105 is improved, further preventing the metal wire from contacting the end cover 2101 and improving the safety performance of the end cover assembly 21.

In some embodiments of the present disclosure, one side of the abutment portion 2113 may extend along the axial direction of the terminal body 2106 to be connected with the terminal board 2103. The above structure can enhance the connection strength between the abutment portion 2113 and the blocking portion 2109.

In some embodiments of the present disclosure, the abutment portion 2113 is provided at an end of the connecting portion 2112 close to the first protrusion 2107 and is connected to the sealing portion 2111. In the above technical solution, by the abutment portion 2113 provided at an end of the connecting portion 2112 close to the first protrusion 2107 and connected to the sealing portion 2111, a connection with the blocking portion 2109 can be formed inside the blocking portion 2109 to ensure a balanced force on two opposite sides of the blocking portion 2109 in a radial direction; the abutment portion 2113 connected to the sealing portion 2111 can facilitate production and improve a structure integrity of the sealing member 2110.

In some embodiments of the present disclosure, a side of the connecting portion 2112 facing away from the first protrusion 2107 is abutted against the terminal board 2103. In the above technical solution, the connecting portion 2112 abutted against the terminal board 2103 can cut off the path of the metal wire of the terminal body 2106 passing through the gap between the connecting portion 2112 and the terminal board 2103, thereby improving the safety of the end cover assembly 21.

In some embodiments of the present disclosure, the side of the connecting portion 2112 facing away from the first protruding portion 2107 is in an interference fit with the terminal board 2103. By providing an interference fit between the connecting portion 2112 and the terminal board 2103, the relative pressure between the sealing member 2110 and the terminal board 2103 is enhanced, the metal wire of the terminal body 2106 is prevented from being connected to the end cover 2101 through the connecting portion 2112 to form a short circuit, and the safety of the end cover assembly 21 is guaranteed.

In some embodiments of the present disclosure, a first avoidance groove 2114 recesses inwardly is formed on one side of the connecting portion 2112 toward the terminal body 2106. In the axial direction of the terminal body 2106, one end of the first avoidance groove 2114 may extend to the terminal board 2103, and the other end of the first avoidance groove 2114 may extend to be flush with the first protrusion 2107 at most. In the peripheral direction of the terminal body 2106, one first avoidance groove 2114 may be provided continuously or a plurality of first avoidance grooves 2114 may be spaced apart. In the above technical solution, the first avoidance groove 2114 is provided to provide space for the connecting portion 2112 to be compressively deformed and prevent the sealing member 2110 from premature aging due to excessive stress.

In some embodiments of the present disclosure, the gap between the connecting portion 2112 and the insulating member 2104 forms a second avoidance groove 2115. The second avoidance groove 2115 is surrounded by the connecting portion 2112, the abutment portion 2113 and the blocking portion 2109. In the above technical solution, the second avoidance groove 2115 is provided to provide space for the connecting portion 2112 to be compressively deformed, thereby preventing the sealing member 2110 from premature aging due to excessive stress.

In some embodiments of the present disclosure, a first recess 2116 recesses inwardly is provided on an outer peripheral surface of the terminal body 2106. The first recess 2116 and the first protrusion 2107 are spaced apart in the axial direction of the first through hole 2105. The first recess 2116 is configured to accommodate at least part of the terminal board 2103. In the above technical solution, the first recess 2116 is provided to fix the terminal board 2103, thereby improving the stability of the connection between the terminal board 2103 and the terminal body 2106.

In some embodiments of the present disclosure, the terminal board 2103 is snap-fitted to the terminal body 2106. By providing a snap connection, the convenience of connecting the terminal board 2103 and the terminal body 2106 is improved.

In some embodiments of the present disclosure, part of the terminal board 2103 may be disposed in the first recess 2116, and the extension length of the first recess 2116 in the axial direction of the terminal body 2106 is equal to the thickness of the terminal board 2103. In the above technical solution, the terminal board 2103 can be effectively connected to the terminal body 2106, a relative movement between the terminal board 2103 and the terminal body 2106 can be prevented, and the stability of the terminal body 2106 can be guaranteed.

Please refer to FIG. 3. According to some embodiments of the present disclosure, the present disclosure also provides the battery cell 20, including the housing 22, the end cover assembly 21 and the electrode assembly 23. The housing 22 has the opening; the end cover assembly 21 is as described in any of the above solutions. The end cover assembly 21 closes the opening and forms the accommodating cavity with the housing 22. The electrode assembly 23 is disposed in the accommodating cavity and is electrically connected to the electrode terminal 2102 of the end cover assembly 21.

According to some embodiments of the present disclosure, the present disclosure also provides the battery 100, including the battery cell 20 described in any of the above solutions.

According to some embodiments of the present disclosure, the present disclosure also provides an electrical apparatus, including the battery 100 described in any of the above solutions, and the battery 100 is configured to provide electrical energy for the electrical apparatus. The electrical apparatus may be any of the aforementioned devices or systems using the battery 100.

Finally, it should be noted that: the above embodiments are only used to illustrate, not to limit, the technical solution of the present disclosure. Although the present disclosure is described in detail with reference to the foregoing embodiments, those skilled in the art should understand that they may still modify the technical solutions described in the foregoing embodiments, or replace some of the technical features with equivalents, but these modifications or replacements do not depart the essence of the corresponding technical solutions from the gist and scope of the technical solutions of each embodiment of the present disclosure. Especially, as long as there is no structural conflict, the various technical features mentioned in respective embodiments can be combined in any way. The present disclosure is not limited to specific embodiments disclosed herein, but includes all technical solutions falling within the scope of the claims.

## Claims

1. An end cover assembly for a battery cell, comprising:
an end cover provided with a first through hole;
an electrode terminal comprising a terminal body and an annular first protrusion protruding from an outer peripheral surface of the terminal body, at least part of the terminal body being accommodated in the first through hole, and a diameter of the first protrusion being greater than a diameter of the first through hole;
a terminal board disposed on a side of the end cover facing away from the first protrusion and connected to the terminal body; and
an insulating member disposed around the terminal body and comprising an insulating body and a blocking portion, at least part of the insulating body being disposed between the terminal board and the end cover, and the blocking portion protruding from a side of the insulating body facing away from the terminal board, extending into the first through hole, and disposed between the end cover and the terminal body.

2. The end cover assembly according to claim 1, further comprising a sealing member comprising a sealing portion disposed between the end cover and the first protrusion, wherein the sealing portion is connected to the first protrusion in a sealing manner, and the blocking portion abuts against the sealing portion.

3. The end cover assembly of claim 1 or 2, wherein the blocking portion is in an interference fit with the sealing portion.

4. The end cover assembly according to claim 2 or 3, wherein the sealing member further comprises a connecting portion disposed around the terminal body, and the sealing portion is disposed around the connecting portion.

5. The end cover assembly according to claim 4, wherein the sealing member further comprises an abutment portion disposed around the connecting portion; and in a radial direction of the first through hole, the abutment portion is clamped between the connecting portion and the blocking portion.

6. The end cover assembly according to claim 5, wherein the abutment portion is in an interference fit with the blocking portion.

7. The end cover assembly according to claim 5 or 6, wherein the abutment portion is provided at an end of the connecting portion close to the first protrusion and is connected to the sealing portion.

8. The end cover assembly according to any one of claims 4 to 7, wherein a side of the connecting portion facing away from the first protrusion abuts against the terminal board.

9. The end cover assembly according to any one of claims 4 to 8, wherein a side of the connecting portion facing away from the first protrusion is in an interference fit with the terminal board.

10. The end cover assembly according to any one of claims 4 to 9, wherein a first avoidance groove, recessed inwardly, is formed on a side of the connecting portion facing the terminal body.

11. The end cover assembly according to any one of claims 4 to 10, wherein a second avoidance groove is formed by a gap between the connecting portion and the insulating member.

12. The end cover assembly according to any one of claims 1 to 11, wherein a first recess, recessed inwardly, is provided on the outer peripheral surface of the terminal body, spaced apart from the first protrusion in an axial direction of the first through hole, and configured to accommodate at least part of the terminal board.

13. The end cover assembly according to claims 1 to 12, wherein the terminal board is snap-fitted to the terminal body.

14. A battery cell, **characterized by** comprising:
a housing with an opening;
the end cover assembly according to any one of claims 1 to 13 for closing the opening to form an accommodating cavity with the housing; and
an electrode assembly provided in the accommodating cavity and electrically connected to the electrode terminal of the end cover assembly.

15. A battery, **characterized by** comprising the battery cell according to claim 14.

16. An electrical apparatus, **characterized by** comprising the battery according to claim 15 configured to provide electrical energy.
